# EUROPEAN PATENT SPECIFICATION

(11) **EP 2 724 947 B1**
(45) Date of publication and mention of the grant of the patent: **16.03.2016**
(21) Application number: 12189936.3
(22) Date of filing: 25.10.2012
(51) Int. Cl.: B65B 25/02, B65G 47/08, B65G 47/31, A01G 5/02, B65G 15/14

(54) **Apparatus for gathering cut flowers**
Vorrichtung zum Einsammeln von Schnittblumen
Appareil pour rassembler des fleurs coupées

(43) Date of publication of application: 30.04.2014
(73) Proprietor: Bercomex B.V., 1624 PB Hoorn (NL)
(72) Inventor: Miedema, Willibrordus Jaring, 1778 KN Westerland (NL); Van Leeuwen, Leo, 1433 ME Kudelstraart (NL); Ruijter, Bram, 1667 GS Twisk (NL); Timmerman, Alexander Jozef, 1613 EM Grootebroek (NL); Winder, Eduard Nicolaas Petrus, 1871 EJ Schoorl (NL); Bot, Nicolaas Petrus Johannes, 1617 VW Westwoud (NL); Geels, Bernardus Johannes, 1852 RP Heiloo (NL); Koomen, Jeffrey, 1067 CP Amsterdam (NL); Ruiter, Robin Simon, 1058 JJ Amsterdam (NL)
(74) Representative: De Vries & Metman

(56) References cited:
- EP-A1- 0 449 386
- NL-A- 8 700 928

## Description

The invention relates to an apparatus for gathering cut flowers.

A known apparatus for gathering cut flowers is shown in NL-C-1009091. In this known apparatus the cut flowers one by one are positioned in a flexible element which is guided in a hoop between closing members. When the desired number of cut flowers is received within the hoop, the flexible element is tensioned and the closing members are pressed towards each other for creating a bundle of cut flowers which, next, by an appropriate movement of the gathering apparatus is transferred to a conveyor for being tied together.

This known apparatus is part of a device comprising a suspension conveyor in which the cut flowers are conveyed towards at least two gathering apparatuses. Arriving cut flowers are supplied alternately to the one and to the other gathering apparatus. As such, a desired output of the entire device may be achieved. However, when a gathering apparatus has completed a bundle and transfers it to the conveyor, said gathering apparatus for some time cannot receive cut flowers from the suspension conveyor, which have to be received therefore by another gathering apparatus or which have to remain longer in the suspension conveyor (for example by making another turn around the suspension conveyor, which however may lead to a disruption of the normal, regular feed of cut flowers to the suspension conveyor).

It is an object of the present invention to provide an improved apparatus for gathering cut flowers.

In accordance with the present invention the apparatus for gathering cut flowers is characterized by - a first conveyor devised for supplying cut flowers with an average first velocity and with a first spacing between successive cut flowers;
- a second conveyor devised for receiving the cut flowers from the first conveyor and devised for conveying said cut flowers with an average second velocity smaller than the average first velocity of the first conveyor for positioning successive cut flowers at a second spacing smaller than the first spacing;
- a third conveyor devised for receiving the cut flowers from the second conveyor and devised for conveying said cut flowers with an average third velocity smaller than the average second velocity of the second conveyor for positioning successive cut flowers in a bundle;
wherein the first, second and third conveyors are devised for conveying the cut flowers in a vertical position with the stem facing upwards.

The first conveyor may receive the cut flowers from a supply, such as for example a suspension conveyor of a type known from the state of the art (for example as illustrated in NL-C-1009091 or NL-C-1009464). The vertical position of the cut flowers enhances the quality of the final bundles of cut flowers achieved with the present apparatus. The first spacing (for example about 300 mm) of the cut flowers at the first conveyor, among others, will depend from the ratio between the supply speed (for example the speed of a suspension conveyor) and the average first velocity and the spacing of the cut flowers at the supply (for example the distance between successive suspension members of a suspension conveyor). Because the average second velocity is smaller than the average first velocity, the cut flowers are positioned at a smaller second spacing at the second conveyor. This process is repeated during the transfer of the cut flowers from the second towards the third conveyor, at which the cut flowers are positioned sufficiently close for successive operations, such as for example tying the cut flowers together.

The apparatus according to the present invention is capable of gathering cut flowers at a very high speed.

In a preferred embodiment of the apparatus according to the present invention, the second conveyor is devised to be driven alternately with a high velocity higher than the average second velocity and a low velocity smaller than the average second velocity.

Preferably, the low velocity substantially equals zero and occurs during receiving a cut flower from the first conveyor. This means that the second conveyor is at a standstill when a cut flower passes from the first towards the second conveyor. Immediately after receipt of said cut flower the second conveyor is driven with the high velocity until a next cut flower arrives. It is noted that the high velocity also may occur during whole of or only during part of the period between the arrival of two successive cut flowers.

Preferably at least one of the first, second and third conveyors is devised to be operated in a manner to achieve, at the third conveyor, separate bundles each comprising a desired number of cut flowers. Such separate bundles facilitate the further processing of the cut flowers.

In a preferred embodiment of such an apparatus, then, the second conveyor is devised to be operated in a manner to create at the second conveyor successive groups of cut flowers with each the desired number of cut flowers at said second spacing and with a larger third spacing between the last cut flower of a previous group and the first cut flower of a next group. For example, when bundles each comprising ten cut flowers have to be created, the second conveyor is driven in such a manner that every tenth spacing is larger than the other spacings.

Such a result may be achieved by an embodiment in which the second conveyor is devised such that its high velocity is temporarily increased between the moment of receiving from the first conveyor the last cut flower of a previous group and the moment of receiving from the first conveyor the first cut flower of a next group.

Preferably, then, the second conveyor is devised such that its high velocity is increased that much and that long that all cut flowers of a previous group have been transferred to the third conveyor before the first cut flower of a next group is received from the first conveyor.

As a result the second conveyor can be kept very short (for example at most 160 mm long) and always only will carry at the same time at most the cut flowers of a single group. After completion of a group the second conveyor is emptied before again receiving the first cut flower of a next group.

In many instances it will be sufficient that the first and third conveyors are devised to be driven with a constant velocity (which, then, defines the respective average velocity). However, it is also possible that the first and/or third conveyor are devised to be driven in any other manner (for example alternately with two different velocities -of which one also may be zero- defining together the respective average velocity).

The result of the operation of the present apparatus will be that at the third conveyor separate groups (bundles) of closely positioned cut flowers are created which may be processed in any desired manner. For example, the apparatus according to the present invention further may be provided with at least one device for tying together a bundle of cut flowers positioned at the third conveyor. Such a device may be of any known type.

Preferably, the conveyors comprise belt conveyors with endless belts. For example each belt conveyor may comprise two opposite cooperating belts of which at least one is a driven belt. For good results (a regular and reproducible supply of cut flowers) it is preferred that opposite belts of a conveyor both are driven belts.

For effectively controlling the operation of the apparatus, it may be advantageous that it comprises at least one sensor positioned adjacent a conveyor for sensing a passing cut flower and generating a corresponding sensor signal, and a control unit for receiving said sensor signal and for, based thereon, sending a respective control signal to a drive source of a conveyor.

For example, such a sensor may be located at the end of the first conveyor for, eventually, controlling a drive source (for example an electric motor) of the second conveyor. This also allows to take into account a situation in which the supply of cut flowers by the first conveyor is temporarily interrupted, for example when a suspension member of a suspension conveyor feeding the cut flowers to the first conveyor, for whatever reason is empty.

Such a sensor may comprise an optical sensor, electrical sensor, mechanical sensor, capacitive sensor or any other type of sensor.

Of course a multitude of such sensors may be provided, if required.

For further processing the bundled and tied cut flowers it may be advantageous that the apparatus further comprises a tilting conveyor following the third conveyor for tilting the bundles of cut flowers to a horizontal position and a collecting conveyor for receiving and supporting said bundles in said horizontal position.

Hereinafter the invention will be elucidated by referring to the drawings, in which
Figure 1 schematically shows a top plan view of an embodiment of the apparatus according to the present invention;
Figure 2 schematically shows a side elevational view of the apparatus of figure 1;
Figure 3 schematically shows a side elevational view of part of a second embodiment of the apparatus according to the present invention, and
Figure 4 schematically shows a cross section according to IV-IV in figure 3.

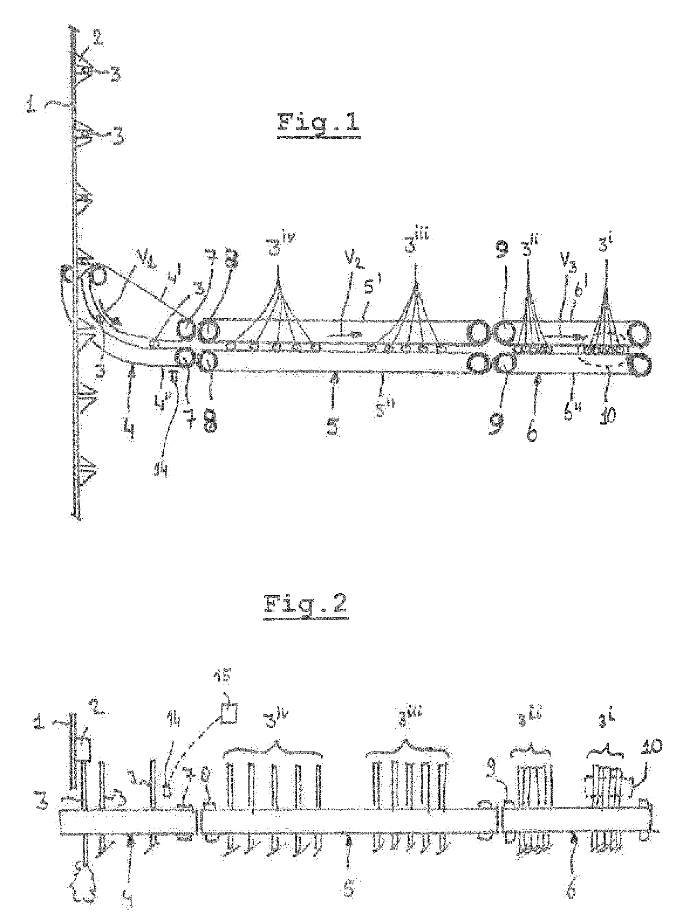

Firstly referring to figure 1, a first embodiment of an apparatus for gathering cut flowers is shown in a top plan view. The cut flowers arrive from a suspension conveyor 1 with suspension members 2 for individual cut flowers 3. The apparatus comprises: a first conveyor 4 for supplying the cut flowers 3 with an average first velocity V₁ and with a first spacing between successive cut flowers; a second conveyor 5 for receiving the cut flowers 3 from the first conveyor 4 and for conveying said cut flowers with an average second velocity V₂ smaller than the average first velocity V₁ of the first conveyor 4 for positioning successive cut flowers at a second spacing smaller than the first spacing; and a third conveyor 6 for receiving the cut flowers 3 from the second conveyor 5 and for conveying said cut flowers with an average third velocity V₃ smaller than the average second velocity V₂ of the second conveyor for positioning successive cut flowers in a bundle.

Each conveyor 4-6 comprises a belt conveyors with two opposite cooperating endless belts 4'-6' and 4"-6", of which at least one is driven (for example by drums 7-9).

In the illustrated embodiment the first and third conveyors 4,6 are driven with a constant velocity V₁ and V₃, respectively. The second conveyor 5, however, is driven alternately with a high velocity higher than the average second velocity V₂ and a low velocity smaller than the average second velocity V₂. Preferably said low velocity will be zero and will occur during receiving a cut flower 3 from the first conveyor 4.

In a specific embodiment, the high velocity of the second conveyor 5 is temporarily increased between the moment of receiving from the first conveyor 4 the last cut flower of a previous group (for example group 3ⁱⁱⁱ) and the moment of receiving from the first conveyor 4 the first cut flower of a next group (for example group 3^{iv}) . As a result the second conveyor 5 is operated in a manner to create at the second conveyor successive groups (3ⁱ, 3ⁱⁱ, 3ⁱⁱⁱ, 3^{iv}, ..) of cut flowers 3 with each the desired number (in the illustrated embodiment five) of cut flowers at said second spacing and with a larger third spacing between the last cut flower of a previous group and the first cut flower of a next group.

Although in figures 1 and 2 the second conveyor 5 has been illustrated with a length sufficient to receive two groups 3ⁱⁱⁱ and 3^{iv} simultaneously, it preferably will have a shorter length (for example at most 160 mm long) such that it always only will carry at the same time at most the cut flowers of a single group. After completion of such a group the second conveyor 5 is emptied (by transferring the cut flowers to the third conveyor 6) before again receiving the first cut flower of a next group. Such a result may be achieved by an embodiment in which the high velocity of the second conveyor 5 is temporarily increased between the moment of receiving from the first conveyor 4 the last cut flower of a previous group and the moment of receiving from the first conveyor the first cut flower of a next group. Specifically, the high velocity of the second conveyor is increased that much and that long that all cut flowers of a previous group have been transferred to the third conveyor 6 before the first cut flower of a next group is received from the first conveyor 4.

As a result the second conveyor can be kept very short

At the third conveyor 6 the cut flowers of a group (for example groups 3ⁱ and 3ⁱⁱ) are positioned even closer together for forming a bundle and may be tied together by a device 10 (indicated schematically by dotted lines) for tying together a bundle of cut flowers 3 positioned at the third conveyor 6. There may be provided more than one such device 10 which may be of any known type.

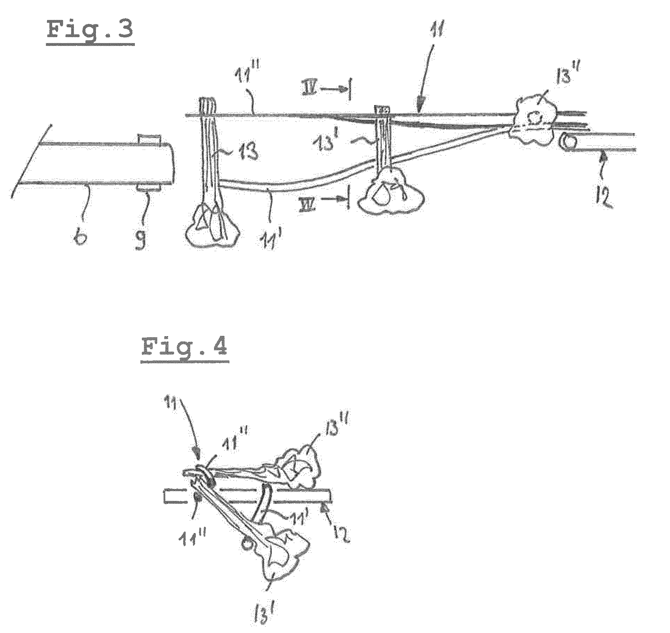

Because of the original suspended position of the cut flowers 3 in the suspension conveyor 1, the cut flowers have a vertical position with the stem facing upwards while passing the first, second and third conveyors 4-6. Thus, in an embodiment of the apparatus illustrated in part in figures 3 and 4, a tilting conveyor 11 with guide 11' and suspension conveyor 11" is illustrated following the third conveyor 6 for tilting the bundles 13, 13',13" of cut flowers to a horizontal position. In such a position the bundles may be supplied to a collecting conveyor 12 for receiving and supporting said groups in said horizontal position. Next the bundles may be processed further as desired (for example passing a wrapping station).

For effectively controlling the operation of the apparatus, it may be advantageous that it comprises at least one sensor 14 (figures 1 and 2) positioned adjacent a conveyor for sensing a passing cut flower and generating a corresponding sensor signal, and a control unit 15 (figure 2) for receiving said sensor signal and for, based thereon, sending a respective control signal to a drive source of a conveyor.

For example, such a sensor 14 may be located at the end of the first conveyor 4 for, eventually, controlling a drive source (for example an electric motor not illustrated) of the second conveyor 5. This also allows to take into account a situation in which the supply of cut flowers 3 by the first conveyor 4 is temporarily interrupted, for example when one or a number of suspension members 2 of the suspension conveyor 1 feeding the cut flowers 3 to the first conveyor 4, for whatever reason is empty.

Such a sensor may comprise an optical sensor, electrical sensor, mechanical sensor, capacitive sensor or any other type of sensor.

Of course a multitude of such sensors may be provided, if required (for example also at the end of the second conveyor 5 for controlling the third conveyor 6).

The invention is not limited to the embodiments described before which may be varied widely within the scope of the invention as defined by the appending claims.

## Claims

1. Apparatus for gathering cut flowers, comprising
- a first conveyor (4) devised for supplying cut flowers (3) with an average first velocity (V₁) and with a first spacing between successive cut flowers (3) ; **characterized by**
- a second conveyor (5) devised for receiving the cut flowers (3) from the first conveyor (4) and devised for conveying said cut flowers (3) with an average second velocity (V₂) smaller than the average first velocity (V₁) of the first conveyor (4) for positioning successive cut flowers (3) at a second spacing smaller than the first spacing;
- a third conveyor (6) devised for receiving the cut flowers (3) from the second conveyor (5) and devised for conveying said cut flowers (3) with an average third velocity (V₃) smaller than the average second velocity (V₂) of the second conveyor (5) for positioning successive cut flowers (3) in a bundle (13);
wherein the first, second and third conveyors (4;5;6) are devised for conveying the cut flowers (3) in a vertical position with the stem facing upwards.

2. Apparatus according to claim 1, wherein the second conveyor (5) is devised to be driven alternately with a high velocity higher than the average second velocity (V₂) and a low velocity smaller than the average second velocity (V₂) .

3. Apparatus according to claim 2, wherein the low velocity substantially equals zero and occurs during receiving a cut flower (3) from the first conveyor (4).

4. Apparatus according to claim 2 or 3, wherein at least one of the first, second and third conveyors (4;5;6) is devised to be operated in a manner to achieve, at the third conveyor (6), separate bundles (13) each comprising a desired number of cut flowers (3).

5. Apparatus according to claim 4, wherein the second conveyor (5) is devised to be operated in a manner to create at the second conveyor (5) successive groups (3ⁱ;3ⁱⁱ;3ⁱⁱⁱ;...) of cut flowers (3) with each the desired number of cut flowers (3) at said second spacing and with a larger third spacing between the last cut flower (3) of a previous group (3ⁱ;3ⁱⁱ;3ⁱⁱⁱ;..) and the first cut flower (3) of a next group (3ⁱⁱ;3ⁱⁱⁱ;3^{iv};...).

6. Apparatus according to claim 5, wherein the second conveyor (5) is devised such that its high velocity is temporarily increased between the moment of receiving from the first conveyor (4) the last cut flower (3) of a previous group (3ⁱ;3ⁱⁱ;3ⁱⁱⁱ;..) and the moment of receiving from the first conveyor (4) the first cut flower (3) of a next group (3ⁱⁱ;3ⁱⁱⁱ.3^{iv}...).

7. Apparatus according to claim 6, wherein the second conveyor (5) is devised such that its high velocity is increased that much and that long that all cut flowers (3) of a previous group (3ⁱ;3ⁱⁱ;3ⁱⁱⁱ;..) have been transferred to the third conveyor (6) before the first cut flower (3) of a next group (3ⁱⁱ;3ⁱⁱⁱ;3^{iv};...).is received from the first conveyor (4).

8. Apparatus according to any of the previous claims, wherein the first (4) and third (6) conveyors are driven with a constant velocity.

9. Apparatus according to any of the previous claims, further provided with at least one device (10) for tying together a bundle (13) of cut flowers (3) positioned at the third conveyor (6).

10. Apparatus according to any of the previous claims, wherein the conveyors (4;5;6) comprise belt conveyors with endless belts (4',4";5',5";6',6").

11. Apparatus according to claim 10, wherein each belt conveyor comprises two opposite cooperating belts(4',4";5',5";6',6") of which at least one is a driven belt.

12. Apparatus according to claim 11, wherein the opposite belts (4',4";5',5";6',6") of a conveyor (4;5;6) both are driven belts.

13. Apparatus according to any of the previous claims, comprising at least one sensor (14) positioned adjacent a conveyor (4;5;6) for sensing a passing cut flower (3) and generating a corresponding sensor signal, and a control unit (15) for receiving said sensor signal and for, based thereon, sending a respective control signal to a drive source of a conveyor (4;5;6).

14. Apparatus according to claim 13, wherein the sensor (14) comprises an optical sensor, electrical sensor, mechanical sensor, capacitive sensor or any other type of sensor.

15. Apparatus according to any of the previous claims, further comprising a tilting conveyor (11) following the third conveyor (6) for tilting the bundles (13) of cut flowers (3) to a horizontal position and a collecting conveyor (12) for receiving and supporting said bundles (13) in said horizontal position.

## Patentansprüche

1. Vorrichtung zum Sammeln von Schnittblumen, aufweisend
- eine erste Fördereinrichtung (4), welche zum Zuführen von Schnittblumen (3) mit einer mittleren ersten Geschwindigkeit (V₁) und mit einem ersten Abstand zwischen aufeinanderfolgenden Schnittblumen (3) eingerichtet ist, **gekennzeichnet durch**
- eine zweite Fördereinrichtung (5), welche zum Erhalten der Schnittblumen (3) von der ersten Fördereinrichtung (4) eingerichtet ist und welche zum Fördern der Schnittblumen (3) mit einer mittleren zweiten Geschwindigkeit (V₂), welche niedriger als die mittlere erste Geschwindigkeit (V₁) der ersten Fördereinrichtung (4) ist, zum Anordnen von aufeinanderfolgenden Schnittblumen (3) in einem zweiten Abstand, welcher kleiner als der erste Abstand ist, eingerichtet ist,
- eine dritte Fördereinrichtung (6), welche zum Erhalten der Schnittblumen (3) von der zweiten Fördereinrichtung (5) eingerichtet ist und welche zum Fördern der Schnittblumen (3) mit einer mittleren dritten Geschwindigkeit (V₃), welche niedriger als die mittlere zweite Geschwindigkeit (V₂) der zweiten Fördereinrichtung (5) ist, zum Anordnen von aufeinanderfolgenden Schnittblumen (3) in einem Bündel (13),
wobei die erste, die zweite und die dritte Fördereinrichtung (4;5;6) zum Fördern der Schnittblumen (3) in einer senkrechten Stellung, wobei der Stiel nach oben zeigt, eingerichtet sind.

2. Vorrichtung gemäß Anspruch 1, wobei die zweite Fördereinrichtung (5) dazu eingerichtet ist, abwechselnd mit einer hohen Geschwindigkeit, welche höher als die mittlere zweite Geschwindigkeit (V₂) ist, und einer niedrigen Geschwindigkeit, welche niedriger als die mittlere zweite Geschwindigkeit (V₂) ist, betrieben zu werden.

3. Vorrichtung gemäß Anspruch 2, wobei die niedrige Geschwindigkeit im Wesentlichen gleich Null ist und beim Erhalten einer Schnittblume (3) von der ersten Fördereinrichtung (4) auftritt.

4. Vorrichtung nach Anspruch 2 oder 3, wobei wenigstens eine von der ersten, der zweiten und der dritten Fördereinrichtung (4;5;6) dazu eingerichtet ist, in einer Weise betrieben zu werden, um an der dritten Fördereinrichtung (6) separate Bündel (13), von welchen ein jedes eine gewünschte Zahl von Schnittblumen (3) aufweist, zu erlangen.

5. Vorrichtung gemäß Anspruch 4, wobei die zweite Fördereinrichtung (5) dazu eingerichtet ist, in einer Weise betrieben zu werden, um an der zweiten Fördereinrichtung (5) aufeinanderfolgende Gruppen (3ⁱ;3ⁱⁱ;3ⁱⁱⁱ;...) von Schnittblumen (3) mit jeder der gewünschten Anzahl von Schnittblumen (3) im zweiten Abstand und mit einem größeren dritten Abstand zwischen der letzten Schnittblume (3) einer vorhergehenden Gruppe (3ⁱ;3ⁱⁱ;3ⁱⁱⁱ;...) und der ersten Schnittblume (3) einer nächsten Gruppe (3ⁱⁱ;3ⁱⁱⁱ;3^{iv};...) zu erzeugen.

6. Vorrichtung gemäß Anspruch 5, wobei die zweite Fördereinrichtung (5) eingerichtet ist, so dass ihre hohe Geschwindigkeit temporär erhöht wird zwischen dem Moment des Erhaltens der letzten Schnittblume (3) einer vorhergehenden Gruppe (3ⁱ;3ⁱⁱ;3ⁱⁱⁱ;...) von der ersten Fördereinrichtung (4) und dem Moment des Erhaltens der ersten Schnittblume (3) einer nächsten Gruppe (3ⁱⁱ;3ⁱⁱⁱ;3^{iv};...) von der ersten Fördereinrichtung (4) .

7. Vorrichtung gemäß Anspruch 6, wobei die zweite Fördereinrichtung (5) eingerichtet ist, so dass ihre hohe Geschwindigkeit so sehr und so lange erhöht wird, dass alle Schnittblumen (3) einer vorhergehenden Gruppe (3ⁱ;3ⁱⁱ;3ⁱⁱⁱ;...) zur dritten Fördereinrichtung (6) befördert wurden, bevor die erste Schnittblume (3) einer nächsten Gruppe (3ⁱⁱ;3ⁱⁱⁱ;3^{iv};...) von der ersten Fördereinrichtung (4) erhalten wird.

8. Vorrichtung gemäß irgendeinem der vorhergehenden Ansprüche, wobei die erste (4) und die dritte (6) Fördereinrichtung mit einer konstanten Geschwindigkeit betrieben werden.

9. Vorrichtung gemäß irgendeinem der vorhergehenden Ansprüche, welche ferner mit wenigstens einer Vorrichtung (10) zum Zusammenbinden eines Bündels (13) von Schnittblumen (3), welche an der dritten Fördereinrichtung (6) angeordnet ist, bereitgestellt ist.

10. Vorrichtung gemäß irgendeinem der vorhergehenden Ansprüche, wobei die Fördereinrichtungen (4;5;6) Bandförderer mit Endlosbändern (4',44'';5'',5'';6'',6'') aufweisen.

11. Vorrichtung gemäß Anspruch 10, wobei jeder Bandförderer zwei gegenüberliegende zusammenwirkende Bänder (4'',4'';5'',5'';6'',6'') aufweist, von welchen wenigstens eines ein angetriebenes Band ist.

12. Vorrichtung gemäß Anspruch 11, wobei beide gegenüberliegenden Bänder (4',4";5',5'';6',6") einer Fördereinrichtung (4;5;6) angetriebene Bänder sind.

13. Vorrichtung gemäß irgendeinem der vorhergehenden Ansprüche, aufweisend wenigstens einen zu einer Fördereinrichtung (4;5;6) benachbart angeordneten Sensor (14) zum Erfassen einer passierenden Schnittblume (3) und Erzeugen eines korrespondierenden Sensorsignals, und eine Steuereinheit (15) zum Empfangen des Sensorsignals und zum Senden, basierend darauf, eines entsprechenden Steuersignals an eine Antriebsquelle einer Fördereinrichtung (4;5;6).

14. Vorrichtung gemäß Anspruch 13, wobei der Sensor einen optischen Sensor, einen elektrischen Sensor, einen mechanischen Sensor, einen kapazitiven Sensor oder irgendeinen anderen Typ von Sensor aufweist.

15. Vorrichtung gemäß irgendeinem der vorhergehenden Ansprüche, ferner aufweisend eine auf die dritte Fördereinrichtung (6) folgende Schwenkfördereinrichtung (11) zum Schwenken der Bündel (13) von Schnittblumen (3) in eine horizontale Stellung, und eine Sammelfördereinrichtung (12) zum Erhalten und Stützen der Bündel (13) in der horizontalen Stellung.

## Revendications

1. Appareil pour rassembler des fleurs coupées, comprenant
- un premier transporteur (4) conçu pour fournir des fleurs coupées (3) avec une première vitesse moyenne (V₁) et avec un premier espacement entre des fleurs coupées (3) successives ; **caractérisé par**
- un deuxième transporteur (5) conçu pour recevoir les fleurs coupées (3) à partir du premier transporteur (4) et conçu pour transporter lesdites fleurs coupées (3) avec une deuxième vitesse moyenne (V₂) inférieure à la première vitesse moyenne (V₁) du premier transporteur (4) pour positionner des fleurs coupées (3) successives à un deuxième espacement inférieur au premier espacement ;
- un troisième transporteur (6) conçu pour recevoir les fleurs coupées (3) à partir du deuxième transporteur (5) et conçu pour transporter lesdites fleurs coupées (3) avec une troisième vitesse moyenne (V₃) inférieure à la deuxième vitesse moyenne (V₂) du deuxième transporteur (5) pour positionner des fleurs coupées (3) successives dans un bouquet (13) ;
dans lequel les premier, deuxième et troisième transporteurs (4 ; 5 ; 6) sont conçus pour transporter les fleurs coupées (3) dans une position verticale avec la tige dirigée vers le haut.

2. Appareil selon la revendication 1, dans lequel le deuxième transporteur (5) est conçu pour être entraîné, en alternance, avec une vitesse élevée supérieure à la deuxième vitesse moyenne (V₂) et une faible vitesse inférieure à la deuxième vitesse moyenne (V₂).

3. Appareil selon la revendication 2, dans lequel la faible vitesse est sensiblement égale à zéro et apparaît pendant la réception d'une fleur coupée (3) à partir du premier transporteur (4).

4. Appareil selon la revendication 2 ou 3, dans lequel au moins l'un parmi les premier, deuxième et troisième transporteurs (4 ; 5 ; 6) est conçu pour être actionné de manière à obtenir, au niveau du troisième transporteur (6), des bouquets séparés (13) comprenant chacun un nombre souhaité de fleurs coupées (3).

5. Appareil selon la revendication 4, dans lequel le deuxième transporteur (5) est conçu pour être actionné de manière à créer au niveau du deuxième transporteur (5) des groupes successifs (3ⁱ; 3ⁱⁱ ; 3ⁱⁱⁱ ; ...) de fleurs coupées (3) chacun avec le nombre souhaité de fleurs coupées (3) audit deuxième espacement et avec un troisième espacement plus grand entre la dernière fleur coupée (3) d'un groupe précédent (3ⁱ ; 3ⁱⁱ ; 3ⁱⁱⁱ ; ...) et la première fleur coupée (3) d'un groupe suivant (3ⁱⁱ ; 3ⁱⁱⁱ ; 3^{iv} ; ...).

6. Appareil selon la revendication 5, dans lequel le deuxième transporteur (5) est conçu de sorte que sa vitesse élevée soit temporairement augmentée entre le moment de réception, à partir du premier transporteur (4), de la dernière fleur coupée (3) d'un groupe précédent (3ⁱ ; 3ⁱⁱ ; 3ⁱⁱⁱ ; ...) et le moment de réception, à partir du premier transporteur (4), de la première fleur coupée (3) d'un groupe suivant (3ⁱⁱ ; 3ⁱⁱⁱ ; 3^{iv} ; ...).

7. Appareil selon la revendication 6, dans lequel le deuxième transporteur (5) est conçu de sorte que sa vitesse élevée soit augmentée suffisamment et pour une durée permettant de transférer toutes les fleurs coupées (3) d'un groupe précédent (3ⁱ ; 3¹¹ ; 3ⁱⁱⁱ ; ...) au troisième transporteur (6) avant que la première fleur coupée (3) d'un groupe suivant (3ⁱⁱ ; 3ⁱⁱⁱ ; 3^{iv} ; ...) ne soit reçue à partir du premier transporteur (4).

8. Appareil selon l'une des revendications précédentes, dans lequel les premier (4) et troisième (6) transporteurs sont entraînés avec une vitesse constante.

9. Appareil selon l'une des revendications précédentes, muni en outre d'au moins un dispositif (10) pour attacher ensemble un bouquet (13) de fleurs coupées (3) positionnées au niveau du troisième transporteur (6).

10. Appareil selon l'une des revendications précédentes, dans lequel les transporteurs (4 ; 5 ; 6) comprennent des transporteurs à courroie avec des courroies sans fin (4', 4" ; 5', 5'' ; 6', 6").

11. Appareil selon la revendication 10, dans lequel chaque transporteur à courroie comprend deux courroies opposées coopérantes (4', 4'' ; 5', 5'' ; 6', 6'') dont au moins l'une est une courroie entraînée.

12. Appareil selon la revendication 11, dans lequel les courroies opposées (4', 4'' ; 5', 5" ; 6' , 6") d'un transporteur (4 ; 5 ; 6) sont toutes les deux des courroies entraînées.

13. Appareil selon l'une des revendications précédentes, comprenant au moins un capteur (14) positionné de manière adjacente à un transporteur (4 ; 5 ; 6) destiné à détecter une fleur coupée (3) qui passe et à générer un signal de détection correspondant, et une unité de commande (15) destinée à recevoir ledit signal de détection et à envoyer, sur la base de celui-ci, un signal de commande respectif à une source d'entraînement d'un transporteur (4 ; 5 ; 6).

14. Appareil selon la revendication 13, dans lequel le capteur (14) comprend un capteur optique, un capteur électrique, un capteur mécanique, un capteur capacitif ou tout autre type de capteur.

15. Appareil selon l'une des revendications précédentes, comprenant en outre un transporteur de basculement (11) qui suit le troisième transporteur (6) destiné à faire basculer les bouquets (13) de fleurs coupées (3) à une position horizontale et un transporteur de collecte (12) destiné à recevoir et supporter lesdits bouquets (13) dans ladite position horizontale.
